# EUROPÄISCHE PATENTANMELDUNG

(11) **EP 1 143 715 A1**
(43) Veröffentlichungstag der Anmeldung: **10.10.2001**
(21) Anmeldenummer: 01105108.3
(22) Anmeldetag: 02.03.2001
(51) Int. Cl.: H04N 5/268

(54) **Asynchrones Videoumschaltverfahren und -system**

(30) Priorität: 29.03.2000 EP 00106699
(71) Anmelder: w + k VideoCommunication GmbH & Co. KG, 24118 Kiel (DE)
(72) Erfinder: Riedel Matthias, 24536 Neumünster (DE)
(74) Vertreter: Seemann, Ralph, Dr. Dipl.-Phys.

(57) **Zusammenfassung**

Die Erfindung betrifft ein Verfahren zum Schalten von einem ersten Signal (10, 401) zu einem zweiten Signal (10, 402), wobei die Signale in einem ersten Bereich (40) Synchronisationsimpulse (20, 202) und in einem zweiten Bereich nutzbare Informationen (15, 30) umfassen, wobei ein Schaltsignal (403) vorgesehen ist.

Die Erfindung betrifft ferner ein Videosystem mit wenigstens zwei Videoquellen, die Signale (10, 401, 402) umfassend Ton- und/oder Bilddaten (15, 30) zur Verfügung stellen, wobei die Signale (10, 401, 402) in einem ersten Bereich (40) Synchronisationsimpulse (20, 202) umfassen.

Das erfindungsgemäße Verfahren zeichnet sich dadurch aus, daß nach einer Veränderung des Schaltsignals (403) der Synchronisationsimpuls (20, 202) des ersten Signals (401) verlängert wird.

Das erfindungsgemäße Videosystem zeichnet sich dadurch aus, daß zum Umschalten von einer ersten Videoquelle zu einer weiteren Videoquelle wenigstens ein Synchronisationsimpuls (20) des Signals (10, 401, 402) der ersten Videoquelle verlängerbar ist.

## Beschreibung

Die Erfindung betrifft ein Verfahren zum Schalten von einem ersten Signal zu einem zweiten Signal und ein Videosystem mit wenigstens zwei Videoquellen.

Unter Video wird heutzutage das Aufzeichnen, Speichern, Verarbeiten und Bearbeiten und Wiedergeben von bewegten Bildern und insbesondere Farbbildern verstanden. Ein Standard für diese Bildsignale ist in der CCIR 656-Norm festgelegt. In Europa bedeutet dies 625 Zeilen pro Bild bei einer Rasterwechselfrequenz von 50 Hz.

Damit das menschliche Auge ein flimmerfreies Videobild sieht, sollten wenigstens 50 Bildwechsel pro Sekunde erfolgen. Der technische Aufwand ist hierfür allerdings relativ hoch, so daß nur 25 Bilder pro Sekunde übertragen werden, wobei der Flimmereffekt dadurch umgangen wird, daß keine Vollbilder übertragen werden, sondern ineinander verschachtelte Halbbilder. Das ungerade Halbbild (Odd) enthält hierbei die ungeradzahligen Bildzeilen und das gerade Halbbild (Even) die geradzahligen.

Es existieren viele Anwendungen, bei denen von verschiedenen Bildquellen oder Videoquellen Daten und insbesondere Bilddaten auf eine Vorrichtung oder ein Gerät, insbesondere ein Aufzeichnungsgerät, aufgebracht wird, wobei insbesondere zur Anzeige oder zum Speichern dieser Bilddaten ein Schalten von einer Bild- bzw. Videoquelle zur anderen bzw. zu weiteren stattfindet. Entsprechende Anwendungen finden sich vor allem im Sicherheits- und Überwachungsbereich. Es werden neuerdings auch immer häufiger digitale Bilddaten verarbeitet, z.B. mit Hilfe eines Computersystems.

Soll nun zwischen zwei Videosignalen, insbesondere digitalen Videosignalen, umgeschaltet werden, so treten Probleme auf, wenn diese zwei Videosignale nicht synchron zueinander sind. Synchron bedeutet hierbei insbesondere, daß die vertikalen synchronen Signale der Videoquellen zeitgleich zueinander sind und auch die Odd-/Even- bzw. Ungerade-/Geradekennung gleich ist.

Um nach einem Umschaltvorgang eine nachfolgende weitere Bildverarbeitung, insbesondere digitale Bildverarbeitung ohne Fehler durchführen zu können, ist es notwendig, während des vertikalen Synchronisationsimpulses umzuschalten. Dieses ist bei asynchronen Videosignalen nicht möglich. Technisch realisierbar ist lediglich eine Umschaltung während oder kurz nach einem vertikalen Synchronisationsimpuls. Hierbei kommt es relativ häufig zu zeitlichen Verschiebungen der Felder von Videobildern, so daß die nachfolgenden Komponenten falsche Signale verarbeiten und somit erheblich gestört sind.

Um diese Probleme zu vermeiden, existieren bisher drei Lösungsvorschläge.

Zunächst können nur spezielle Videoquellen verwendet werden, die ein synchrones Zeitverhalten aufweisen. Derartige Videoquellen sind allerdings sehr teuer.

Außerdem können insbesondere bei der digitalen Verarbeitung Videoquellen mit einem Gerät synchronisiert werden, bevor sie digitalisiert werden. Derartige sogenannte Timebase-Korrektoren verursachen allerdings zusätzliche Kosten.

Bei einem digitalen Umschaltevorgang wird als dritte Variante ein vertikaler Synchronisationsimpuls nach der Umschaltung unterdrückt. Auf diese Weise wird immer ein zu langes Feld generiert, in dem keine Weiterverarbeitung der Daten stattfindet. Die Generierung eines zu langen Feldes ist allerdings weniger empfindlich als die eines zu kurzen Feldes, so daß diese Lösung im Stand der Technik relativ häufig Verwendung findet. Durch die Unterdrückung eines Bildbereichs während eines bestimmten Zeitrahmens aufgrund der Unterdrückung des vertikalen Synchronisationsimpulses gehen zwangsläufig einige Bilder im Umschaltevorgang verloren. Dieses sind das letzte Bild bzw. Teilbild des Videosignals, von dem weggeschaltet wird, und das erste Bild bzw. Teilbild des Videosignals, zu dem hingeschaltet wird. Damit gehen relativ viel Bildinformationen verloren.

Aufgabe der vorliegenden Erfindung ist es, möglichst wenig Datenfelder bzw. Bilder beim Umschalten von einem ersten Signal zu einem zweiten Signal zu verlieren. Dieses soll möglichst mit einer relativ einfachen technischen Realisierung gelöst werden.

Gelöst wird diese Aufgabe durch ein Verfahren zum Schalten von einem ersten Signal zu einem zweiten Signal, wobei die Signale in einem ersten Bereich Synchronisationsimpulse und in einem zweiten Bereich nutzbare Informationen umfassen, wobei ein Schaltsignal vorgesehen ist, das dadurch weitergebildet ist, daß nach einer Veränderung des Schaltsignals der Synchronisationsimpuls des ersten Signals verlängert wird.

Es ist nämlich erkannt worden, daß durch Verlängern des Synchronisationsimpulses, insbesondere bis zu einer erneuten Synchronisation der jeweiligen Signale, ein Umschalt- bzw. Schaltvorgang realisiert werden kann, bei dem wenig Bilder bzw. Informationsfelder verlorengehen. Insbesondere wird vorzugsweise der Synchronisationsimpuls im Ausgangssignal verlängert. Das Ausgangssignal ist insbesondere das Signal, das von den verschiedenen Signalen gleichzeitig oder abwechselnd gespeist wird und das dann weiterverarbeitet wird, z.B. auf einem Monitor angezeigt wird. Eine Veränderung des Schaltsignals ist insbesondere eine Änderung einer logischen Null zu einer logischen Eins oder umgekehrt.

Vorzugsweise wird das Synchronisationssignal des ersten Signals bis zum Ende des Synchronisationssignals des zweiten Signals verlängert. Durch diese bevorzugte Ausführungsform kommt es im wesentlichen nicht mehr zu Fehlern bei der Umschaltung bzw. der weiteren Verarbeitung des Ausgangssignals. Durch diese Maßnahme ist es insbesondere möglich, daß das erste Signal, von dem umgeschaltet wird, noch voll weiterverarbeitet werden kann. Hierbei wird insbesondere im Ausgangssignal das Synchronisationssignal des ersten Signals als aufsteigende Flanke des Synchronisationssignals im Ausgangssignal verwendet und die absteigende Flanke des Synchronisationssignals des zweiten Signals als absteigende Flanke des Synchronisationssignals des Ausgangssignals.

Vorzugsweise sind die Synchronisationsimpulse vertikale Synchronisationsimpulse. Vorzugsweise umfassen die Informationen Bildsignale. Weiter vorzugsweise sind die ersten und zweiten Signale Videosignale. Eine besonders einfache Verarbeitung bzw. Weiterbearbeitung der Videosignale ergibt sich, wenn die Videosignale digital verarbeitet werden und/oder digital sind.

Vorzugsweise werden eine Vielzahl von Signalen in vorbestimmbaren Zeitabständen umgeschaltet. Durch diesen vorzugsweisen Verfahrensschritt kann eine Vielzahl von Signalen von verschiedenen Quellen weiterverarbeitet werden.

Die Aufgabe wird ferner erfindungsgemäß durch ein Videosystem mit wenigstens zwei Videoquellen, die Signale umfassend Ton- und/oder Bilddaten zur Verfügung stellen, wobei die Signale in einem ersten Bereich Synchronisationsimpulse umfassen, dadurch weitergebildet, daß zum Umschalten von einer ersten Videoquelle zu einer weiteren Videoquelle wenigstens ein Synchronisationsimpuls des Signals der ersten oder der weiteren Videoquelle verlängerbar ist.

Durch das erfindungsgemäße Videosystem ist es nun möglich, einen Umschaltvorgang vorzusehen, bei dem nur ein Bild sozusagen unbrauchbar ist. Insbesondere wird bevorzugterweise der Synchronisationsimpuls, der sich im Ausgangssignal wiederspiegelt, verlängert.

Wenn vorzugsweise der wenigstens eine Synchronisationsimpuls bis zum Ende eines auf diesen Synchronisationsimpuls folgenden Synchronisationsimpuls des Signals der weiteren Videoquelle verlängerbar ist, ist eine besonders bevorzugte Ausführungsform gegeben.

Vorzugsweise sind die Synchronisationsimpulse vertikale Synchronisationsimpulse. Wenn die Signale bevorzugterweise digital sind und/oder digital verarbeitbar sind, ist eine besonders einfache Weiterverarbeitung bzw. Bearbeitung der Signale, insbesondere des Ausgangssignals, möglich. Vorzugsweise umfaßt das Videosystem wenigstens einen Computer.

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im übrigen bzgl. der Offenbarung aller im Text nicht näher erläuterten erfindungsgemäßen Einzelheiten ausdrücklich verwiesen wird. Es zeigen:
- Fig. 1: eine schematische Darstellung eines Zeitdiagramms einer Zeile eines Schwarzweiß-Bildsignals,
- Fig. 2: eine schematische Darstellung des oberen Teils eines Farb-Bildsignals,
- Fig. 3: schematisch das digitale vertikale Synchronisationssignal eines Bildsignals mit Darstellung mehrerer vertikaler Synchronisationsimpulse,
- Fig. 4: schematisch die digitalen vertikalen Synchronisationssignale zweier synchroner Videosignale,
- Fig. 5: schematisch im oberen Teil zwei asynchrone Synchronisationssignale von Videosignalen und darunter ein digitales Umschaltsignal sowie ganz unten ein zugehöriges digitales Ausgangssignal,
- Fig. 6: schematisch eine der Fig. 5 entsprechende Darstellung, bei der ein Synchronisationssignal unterdrückt ist, und
- Fig. 7: schematisch entsprechende Videosignale, bei der das erfindungsgemäße Verfahren angewendet wird.

In den folgenden Figuren sind jeweils gleiche oder entsprechende Teile mit denselben Bezugszeichen bezeichnet, so daß auf eine erneute Vorstellung verzichtet wird.

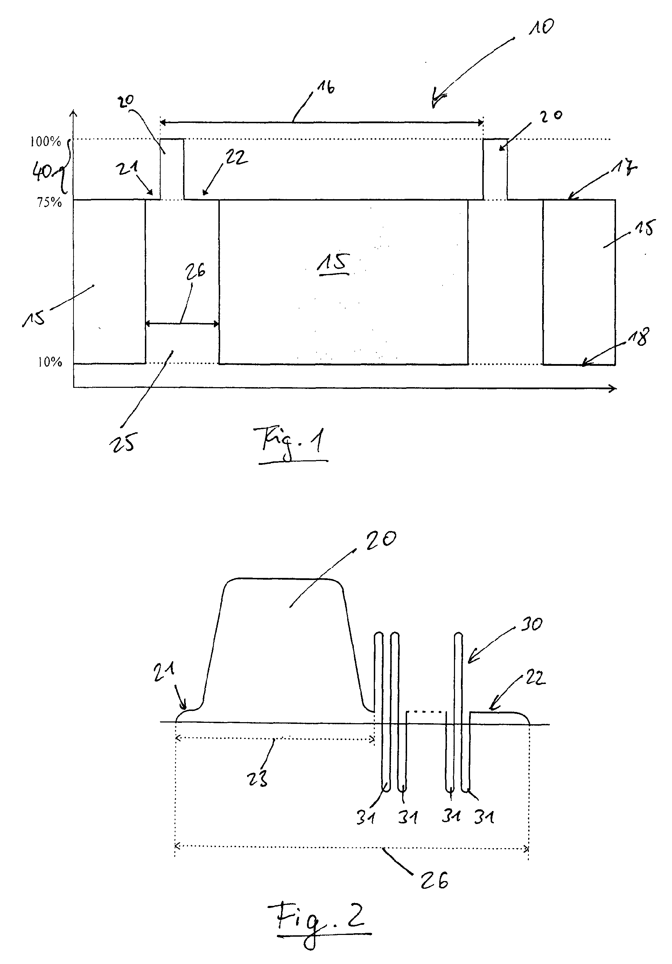

Fig. 1 zeigt eine schematische Darstellung eines Bildsignals 10 und insbesondere eines Videobildsignals. Es ist ein Zeitdiagramm einer Zeile eines Schwarzweiß-Bildsignals dargestellt. Auf der Abszisse ist die Zeit aufgetragen und auf der Ordinate die Amplitude. In dieser Figur ist das Ende eines Halbbildes, ein ganzes Halbbild und der Anfang eines weiteren Halbbildes dargestellt. Ein Halbbild fängt in dieser Darstellung mit einem Synchronsignal 20 hinter einer vorderen Schwarzschulter 21 an. Der Synchronimpuls 20 befindet sich in einem Austastimpuls 25, wobei die Länge 26 des Austastimpulses 25 in diesem Beispiel 11,5 µs ist. die Amplitude des Synchronsignals 20 beträgt 100 %, wohingegen die Amplitude des Austastsignals 75 % beträgt. Die Länge einer Zeile bzw. Zeilenlänge 16 beträgt 64 µs. Die Bildinformation, die auch Luminanz 15 genannt wird, befindet sich zwischen 10 % der Amplitude, die als Weißpegel 18 bezeichnet wird, und 75 % der Amplitude, die als Schwarzpegel bezeichnet wird.

Das Schwarzweiß-Bildsignal wird üblicherweise als BAS-Signal bezeichnet, wobei BAS für Bild-Austast- und Synchron-Signal steht und ausdrückt, wie sich bei Schwarzweiß-Signalen eine Bildzeile zusammensetzt. Damit die Austast- und das Synchronsignal auf der Empfängerseite wieder getrennt werden können, sind die Amplituden der Signale unterschiedlich gewählt worden.

In realitas wird ein Schwarzweiß-Bildsignal invertiert zur Fig. 1 verwendet. D.h. die Amplitude des Synchronsignals beträgt 25 % und die Amplitude des Austastsignals 90 %. Dieses wird aus dem Grunde realisiert, da Schwarzfehler in einem Bild weniger leicht von einer Person erkannt werden können als Weißfehler.

Mit der Farbfernsehtechnik ist das BAS-Signal um die Farbinformation, die Chrominanz genannt wird, erweitert worden. Hierzu wird eine Farbträgerfrequenz von 4,43 MHz auf das BAS-Signal moduliert. Dieses ist in Fig. 2 dargestellt. Das Farbsynchronsignal 30 ist auf der hinteren Schwarzschulter 22 aufmoduliert. Üblicherweise werden hierzu Bursts 31 von 10 bis 12 Perioden verwendet, damit sich der PLL (Phase Locked Loop) auf die Trägerfrequenz einschwingen kann. Der zeitliche Rahmen, der in Fig. 2 dargestellt ist, ist durch die Länge 26 des Austastimpulses 25 gegeben. Der Synchronimpuls 20 hat eine Länge 23 von beispielsweise 6,3 µs.

Gemäß der CCIR-Empfehlung 601 für die Komponenten-Codierung von Videosignalen im Studiobereich ist die Norm für Fernsehsysteme auf 525 Zeilen bei 60 Hz bzw. 625 Zeilen bei 50 Hz normiert worden. Diese Norm wird üblicherweise auch digitale Studionorm oder 4:2:2-Standard genannt. In dieser Empfehlung sind insbesondere Abtastfrequenzen, beispielsweise beim Leuchtdichtesignal von 13,5 MHz und bei jedem Farbdifferenzsignal von 6,75 MHz vorgegeben.

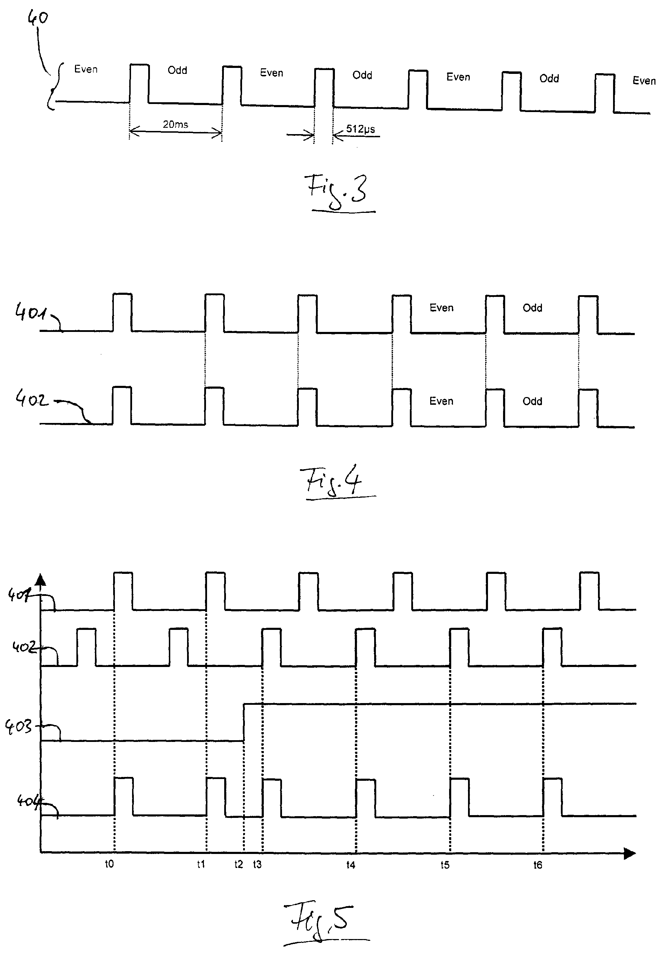

Fig. 3 zeigt schematisch das digitale vertikale Synchronisationssignal eines Videobildes bzw. der Bildsignale 10. Ungerade Halbbilder (Even) wechseln sich mit geraden Halbbildern (Odd) ab. Die Länge eines Halbbildes beträgt 20 ms. Diese Halbbilder werden üblicherweise auch als Feld oder Field bezeichnet. Die Dauer eines hier dargestellten vertikalen Synchronisationsimpulses ist beispielsweise 512 µs. Der vertikale Synchronisationsimpuls dauert in der Regel den Aufbau von sechs Bildzeilen an. Ein Videosignal umfaßt auch einen horizontalen Synchronisationsimpuls (H-Sync), der durch den Beginn einer neuen Bildzeile (Line) alle 64 µs gekennzeichnet ist. Bei dem horizontalen Synchronisationsimpuls hat dieser selbst eine Breite von 6,3 µs.

Zusätzlich zum horizontalen Synchronisationsimpuls und zum vertikalen Synchronisationsimpuls existiert ein Takt, der jeden neuen Bildpunkt oder Pixel kennzeichnet. Die Frequenz des Pixeltakts beträgt für das CCIR 4:2:2-Format in der PAL-Norm 13,5 MHz.

Fig. 4 zeigt schematisch zwei digitale synchrone vertikale Synchronisationssignale von zwei Videosignalen.

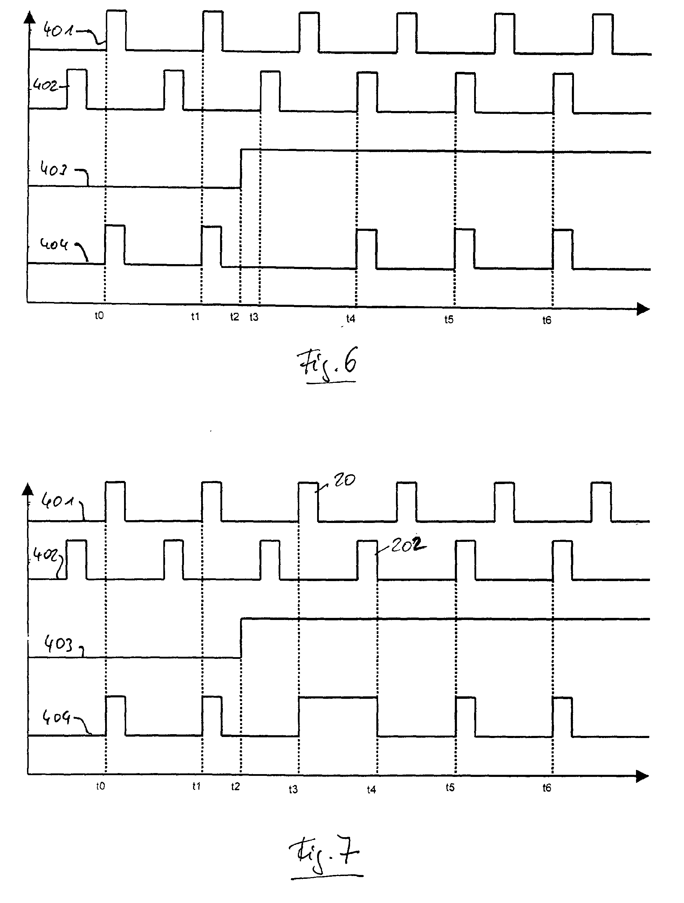

In Fig. 5 ist eine technisch realisierbare Umschaltung zweier asynchroner Videosignale 401 und 402 dargestellt. Um nun von dem Videosignal, dessen digitales vertikales Synchronisationssignal 401 in Fig. 5 dargestellt ist, zu dem Videosignal, dessen digitales vertikales Synchronisationssignal 402 in Fig. 5 dargestellt ist, umzuschalten, wird ein Umschaltsignal 403 verwendet. Zur Zeit t0 bis t1 wird das Ausgangssignal von der ersten Videoquelle geliefert. Zwischen der Zeit t1 und t3 findet eine Umschaltung zur Zeit t2 statt. Hierbei wird beispielsweise das Umschaltsignal von einer logischen Null zu einer logischen Eins verändert. Beginnend von dem Zeitpunkt t3 wird das Ausgangssignal von der zweiten Quelle geliefert, deren Synchronisationssignal 402 des Bildsignals 10 auch in Fig. 5 dargestellt ist. Die Zeitdifferenz zwischen t1 und t2 kann hierbei beliebig kurz sein. Es ist aus Fig. 5 klar ersichtlich, daß zwischen den Zeitpunkten t1 und t3 die Zeit kürzer als 20 ms, also kürzer als ein Halbbild ist. Ggf. könnte auch zu einem späteren Zeitpunkt umgeschaltet werden, so daß die Zeitdifferenz zwischen dem vertikalen Synchronisationsimpulsen auch länger als 20 ms werden. Durch das nicht normgerechte Feld bzw. Halbbild, das während des Umschaltvorgangs entsteht, können die nachfolgenden Komponenten aus dem Tritt geraten bzw. Fehler erzeugen.

Um die Fehlererzeugung zu minimieren, wird im Stand der Technik gemäß Fig. 6 ein vertikaler Synchronisationsimpuls nach der Umschaltung unterdrückt. Die Unterdrückung des Impulses geschieht zum Zeitpunkt t3 in Fig. 6.

Im Zeitraum zwischen t0 und t1 wird das Ausgangssignal von der Quelle 1 geliefert. Dieses ist das letzte normgerechte Feld, das verarbeitet werden kann. Zum Zeitpunkt t2 findet eine Umschaltung von der ersten Quelle auf die zweite Quelle statt. Zum Zeitpunkt t3 wird der vertikale Synchronisationsimpuls unterdrückt. Daraus folgt, daß ein Feld in dem Zeitraum zwischen t3 und t4 verloren geht, da dieses nicht normgerecht ist. Das erste normgerechte Feld liegt dann zwischen t4 und t5. Im Zeitraum t1 bis t4 sind im Ausgangssignal 404 Informationen beider Videosignale 401 und 402 vorhanden.

Gemäß der Erfindung, von der ein Beispiel in Fig. 7 dargestellt ist, wird der vertikale Synchronisationsimpuls verlängert. Hierzu wird nach Umschaltung von Quelle 1 auf Quelle 2 zum Zeitpunkt t2 gewartet, bis der nächste Synchronisationsimpuls der ersten Quelle auftritt. Dieser wird dann bis zum Ende des Synchronisationsimpulses 202 der zweiten Quelle verlängert. Durch diese Maßnahme gehen weniger Bildfelder verloren. Es wird lediglich der Synchronisationsimpuls verlängert, was insgesamt durchschnittlich zu einer kürzeren Umschaltperiode von einem brauchbaren Signal zu dem nächsten brauchbaren Signal führt. Es ist insbesondere erkennbar, daß zwischen den Zeitpunkten t1 und t3 noch ein vollständiges Videobild, wie im oberen Teil des Ausgangssignals 404 dargestellt ist, verarbeitet werden kann und das nächste vollständige Bild schon im Zeitpunkt zwischen t 4 und t5 existent ist.

Insbesondere ist es durch die erfindungsgemäße Lösung möglich, deutlich schneller von einer Quelle zur nächsten Quelle zu schalten und auch zur darauffolgenden Quelle zu schalten, da kein Feld verlorengeht und der Zeitraum des Umschaltens verkürzt wird. Aus der Fig. 7 ist ersichtlich, daß zwischen den Zeitpunkten t0 und t 6 vier normgerechte Felder im Ausgangssignal vorhanden sind, wohingegen gemäß dem Stand der Technik gemäß Fig. 6 lediglich drei normgerechte Felder vorhanden sind. Aufgrund der Möglichkeit, mehr Felder zu Speichern als bei der Methode nach dem Stand der Technik, ist es möglich, innerhalb einer vorgegebenen Zeit zwischen mehr Videoquellen umzuschalten. Somit ist beispielsweise kein zusätzliches Bildspeichersystem nötig, um die gleiche Anzahl von Umschaltungen in der vorgegebenen Zeit realisieren zu können.

### Bezugszeichenliste

- 10: Bildsignal
- 15: Luminanz
- 16: Halbbildlänge
- 17: Schwarzpegel
- 18: Weißpegel
- 20: Synchronimpuls
- 202: anschließender Synchronimpuls des weiteren Signals
- 21: vordere Schwarzschulter
- 22: hintere Schwarzschulter
- 23: Länge des Synchronimpulses
- 25: Austastimpuls
- 26: Länge des Austastimpulses
- 30: Farbsynchronsignal
- 31: Burst
- 40: digitales vertikales Synchronisationssignal des Bildsignals
- 401: digitales vertikales Synchronisationssignal des ersten Bildsignals
- 402: digitales vertikales Synchronisationssignal des zweiten Bildsignals
- 403: Umschaltsignal
- 404: digitales vertikales Synchronisationssignal des Ausgangssignals

## Patentansprüche

1. Verfahren zum Schalten von einem ersten Signal (10, 401) zu einem zweiten Signal (10, 402), wobei die Signale in einem ersten Bereich (40) Synchronisationsimpulse (20, 202) und in einem zweiten Bereich nutzbare Informationen (15, 30) umfassen, wobei ein Schaltsignal (403) vorgesehen ist, **dadurch gekennzeichnet, daß** nach einer Veränderung des Schaltsignals (403) der Synchronisationsimpuls (20, 202) des ersten Signals (401) verlängert wird.

2. Verfahren nach Anspruch 1, **dadurch gekennzeichnet, daß** das Synchronisationssignal (20) des ersten Signals (10, 401) bis zum Ende des Synchronisationssignals (20) des zweiten Signals (10, 402) verlängert wird.

3. Verfahren nach Anspruch 1 und/oder 2, **dadurch gekennzeichnet, daß** die Synchronisationsimpulse (20, 202) vertikale Synchronisationsimpulse sind.

4. Verfahren nach einem oder mehreren der Ansprüche 1 bis 3, **dadurch gekennzeichnet, daß** die Informationen (15, 30) Bildsignale umfassen.

5. Verfahren nach einem oder mehreren der Ansprüche 1 bis 4, **dadurch gekennzeichnet, daß** die ersten und zweiten Signale (10, 401, 402) Videosignale sind.

6. Verfahren nach Anspruch 5, **dadurch gekennzeichnet, daß** die Videosignale digital verarbeitet werden und/oder digital sind.

7. Verfahren nach einem oder mehreren der Ansprüche 1 bis 6, **dadurch gekennzeichnet, daß** eine Vielzahl von Signalen (10, 401, 402) in vorbestimmbaren Zeitabständen umgeschaltet werden.

8. Videosystem mit wenigstens zwei Videoquellen, die Signale (10, 401, 402) umfassend Ton- und/oder Bilddaten (15, 30) zur Verfügung stellen, wobei die Signale (10, 401, 402) in einem ersten Bereich (40) Synchronisationsimpulse (20, 202) umfassen, **dadurch gekennzeichnet, daß** zum Umschalten von einer ersten Videoquelle zu einer weiteren Videoquelle wenigstens ein Synchronisationsimpuls (20) des Signals (10, 401, 402) der ersten Videoquelle oder der weiteren Videoquelle verlängerbar ist.

9. Videosystem nach Anspruch 8, **dadurch gekennzeichnet, daß** der wenigstens eine Synchronisationsimpuls (20) bis zum Ende eines auf diesen Synchronisationsimpuls (20) folgenden Synchronisationsimpuls (202) des Signals (10, 402) der weiteren Videoquelle verlängerbar ist.

10. Videosystem nach Anspruch 8 und/oder 9, **dadurch gekennzeichnet, daß** die Synchronisationsimpulse (20, 202) vertikale Synchronisationsimpulse sind.

11. Videosystem nach einem oder mehreren der Ansprüche 8 bis 10, **dadurch gekennzeichnet, daß** die Signale (10, 401, 402, 403, 404) digital sind und/oder digital verarbeitbar sind.

12. Videosystem nach Anspruch 11, **dadurch gekennzeichnet, daß** das Videosystem wenigstens einen Computer umfaßt.
